(19) Europäisches Patentamt

European Patent Office

Office européen des brevets

(11) **EP 1 703 738 A2**

(12) **EUROPEAN PATENT APPLICATION**

(43) Date of publication:
**20.09.2006 Bulletin 2006/38**

(51) Int Cl.:
***H04N 7/26*** *(2006.01)*

(21) Application number: **06110777.7**

(22) Date of filing: **07.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.03.2005 JP 2005071108**

(71) Applicant: **KABUSHIKI KAISHA TOSHIBA Tokyo (JP)**

(72) Inventors:
- **Kitada, Noriaki**
  **Toshiba Corporation**
  **Minato-ku**
  **Tokyo 105-8001 (JP)**
- **Uchida, Kosuke**
  **Toshiba Corporation**
  **Minato-ku**
  **Tokyo, 105-8001 (JP)**

- **Hoshina, Satoshi**
  **Toshiba Corporation**
  **Minato-ku**
  **Tokyo, 105-8001 (JP)**
- **Kikuchi, Yoshihiro**
  **Toshiba Corporation**
  **Minato-ku**
  **Tokyo, 105-8001 (JP)**
- **Kawashima, Yuji**
  **Toshiba Corporation**
  **Minato-ku**
  **Tokyo 105-8001 (JP)**

(74) Representative: **Henkel, Feiler & Hänzel**
**Patentanwälte**
**Maximiliansplatz 21**
**80333 München (DE)**

(54) **Deblocking method and apparatus for blended images**

(57) According to one embodiment, there is provided an information processing apparatus, including a decoding unit (212) which decodes a moving image stream that is compressed and coded, a deblocking filtering unit (305) which performs a deblocking filtering process for a picture included in the moving image stream to reduce a block distortion, a blending unit (213) which performs a blending process of superimposing a second picture on a first picture with designated transparency, and a control unit (211) which determines whether the blending process is performed for the picture included in the moving image stream and, when the blending process is performed, varies an amount of processing of the deblocking filtering process for at least one of the first and second pictures in accordance with the transparency.

FIG. 3

EP 1 703 738 A2

**Description**

One embodiment of the invention relates to an information processing apparatus capable of decoding a moving image stream, such as a personal computer.

Personal computers with the same audio video (AV) functions as those of audio video apparatuses, such as a digital versatile disc player and a TV set, have recently been developed. These personal computers employ a software decoder for decoding a compressed and coded moving image stream by software. The software decoder allows the compressed and coded moving image stream to be decoded using a processor (CPU) without providing any dedicated hardware.

A system with a software decoder is known in which a stream coded by motion compensation inter-frame prediction coding, such as MPEG2 and MPEG4, is decoded and then an output image signal generated by the decoding is post-filtered to improve the quality of the image signal (see, for example, Jpn. Pat. Appln. KOKAI Publication No. 2001-245294). This system utilizes a technique of shortening time for a post-filtering process by changing a filtering process to be performed in the post-filtering process in order to prevent a frame from dropping.

The post-filtering process is performed outside the software decoder. If, therefore, a delay is caused in the decoding process of the software decoder itself, no frame can be prevented from dropping even by shortening time for the post-filtering.

Attention has recently been attracted to the H.264/AVC (AVC: advanced video coding) standard as the next-generation moving image compressing and coding technology. The compressing and coding technology based on the H.264/AVC standard is more efficient than the prior art compressing and coding technology, such as MPEG2 and MPEG4. Thus, each of encoding and decoding processes corresponding to the H.264/AVC standard requires a larger amount of processing than in the prior art compressing and coding technology.

In a personal computer which is so designed that a moving image stream, which is compressed and coded under the H.264/AVC standard, is decoded by software, as the system increases in load, the decoding process itself will be delayed to make it impossible to reproduce a moving image smoothly.

It is an object of the present invention to provide an information processing apparatus and decoding method, capable of smoothly decoding a moving image stream.

According to an embodiment of the present invention, there is provided an information processing apparatus capable of decoding a moving image stream that is compressed and coded. The apparatus includes a deblocking filtering unit which performs a deblocking filtering process for a picture included in the moving image stream to reduce a block distortion, a blending unit which performs a blending process of superimposing a second picture on a first picture with designated transparency, and a control unit which determines whether the blending process is performed for the picture included in the moving image stream and, when the blending process is performed, varies an amount of processing of the deblocking filtering process for at least one of the first and second pictures in accordance with the transparency.

This summary of the invention does not necessarily describe all necessary features so that the invention may also be a sub-combination of these described features.

The invention can be more fully understood from the following detailed description when taken in conjunction with the accompanying drawings, in which:

FIG. 1 is an exemplary perspective view showing an outward appearance of a computer according to an embodiment of the present invention;
FIG. 2 is an exemplary block diagram of a system configuration of the computer shown in FIG. 1;
FIG. 3 is an exemplary block diagram of functions of video reproduction application programs used in the computer shown in FIG. 1;
FIG. 4 is an exemplary block diagram of a configuration of a software decoder implemented by the video reproduction application programs shown in FIG. 3;
FIG. 5 is an exemplary illustration of an example of a blending process (alpha blending);
FIG. 6 is an exemplary illustration of reference pictures and non-reference pictures included in a moving image stream;
FIG. 7 is an exemplary table illustrating an example of control to reduce an amount of processing for a deblocking filtering process executed by the video reproduction application programs shown in FIG. 3;
FIG. 8 is an exemplary flowchart of blocks of performing a decoding process by the video reproduction application programs shown in FIG. 3;
FIG. 9 is an exemplary diagram of the structure of a moving image stream decoded by the video reproduction application programs shown in FIG. 3; and
FIG. 10 is an exemplary diagram of the structure of an access unit of the moving image stream shown in FIG. 9.

Various embodiments according to the invention will be described hereinafter with reference to the accompanying drawings. In general, according to one embodiment of the invention, there is provided an information processing apparatus, including a decoding unit which decodes a moving image stream that is compressed and coded, a deblocking filtering unit which performs a deblocking filtering process for a picture included in the moving image stream to reduce a block distortion, a blending unit which performs a blending process of superimposing a second picture on a first picture with designated transparency, and a control unit which determines whether the blending process is performed for the picture included in the moving image stream and, when the blending process is performed, varies an amount of processing of the deblocking filtering process for at least one of the first and second pictures in accordance with the transparency.

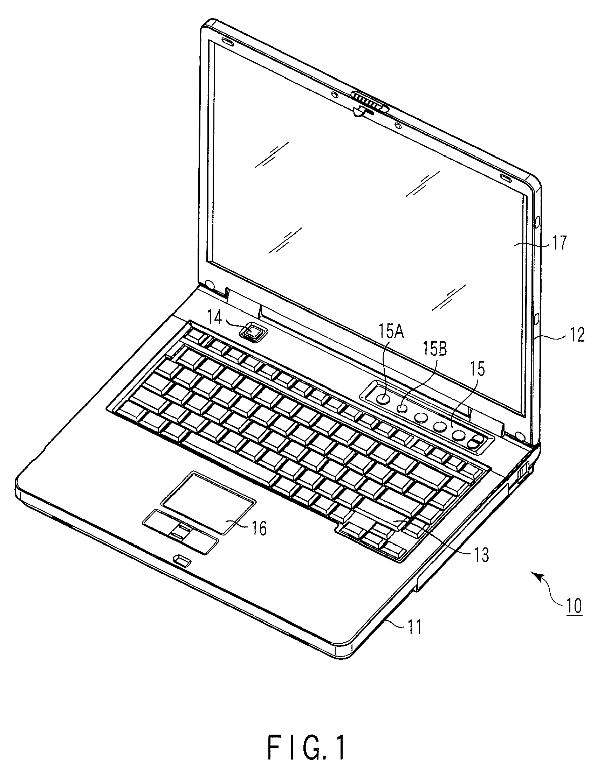

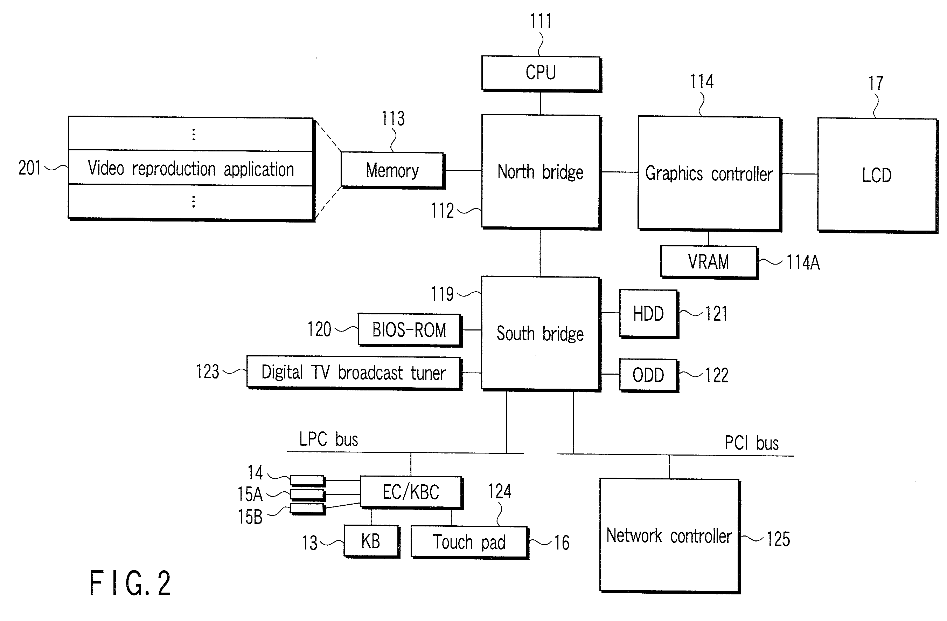

First, the configuration of an information processing apparatus according to the first embodiment will be described with reference to FIGS. 1 and 2. The information processing apparatus is implemented as a notebook personal computer 10.

FIG. 1 is a front view of the notebook personal computer 10 whose display unit is open. The computer 10 includes a main body 11 and a display unit 12. The display unit 12 incorporates a display device having a liquid crystal display (LCD) 17. The display picture of the LCD 17 is located in almost: the central part of the display unit 12.

The display unit 12 is attached to the main body 11 such that it can be turned between its open position and closed position. The main body 11 is a thin, box-type housing and has on its top a keyboard 13, a power button 14 for turning on/off the power supply of the computer 1, an input operation panel 15 and a touch pad 16.

The input operation panel 15 is an input device for inputting an event corresponding to a depressed button and has a plurality of buttons for starting their respective functions. These buttons include a TV start button 15A and a digital versatile disc (DVD) start button 15B. The TV start button 15A starts a TV function of recording and reproducing broadcast program data such as digital TV programs. When a user depresses the button 15A, an application program automatically starts to fulfill the TV function. The DVD start button 15B is a button for reproducing video contents recorded on a DVD. When a user depresses the button 15B, an application program automatically starts to reproduce the video contents.

The system configuration of the notebook personal computer 10 will be described with reference to FIG. 2.

Referring to FIG. 2, the computer 10 includes a CPU 111, a north bridge 112, a main memory 113, a graphics controller 114, a south bridge 119, a BIOS-ROM 120, a hard disk drive (HDD) 121, an optical disk drive (ODD) 122, a digital TV broadcast tuner 123, an embedded controller/keyboard controller IC (EC/KBC) 124 and a network controller 125.

The CPU 111 is a processor for controlling the operations of the computer 10. The CPU 11 carries out various application programs such as an operating system (OS) and a video reproduction application program 201, which are loaded into the main memory 113 from the HDD 121.

The video reproduction application program 201 is software for decoding and reproducing moving image data that is compressed and coded. This program 201 is a software decoder that is based on the H.264/AVC standard. The program 201 has a function of decoding a moving image stream (e.g., digital TV programs received by the digital TV broadcast tuner 123 and high-definition (HD) standard video contents read out of the ODD 122) which is compressed and coded by the coding method defined by the H.264/AVC standard.

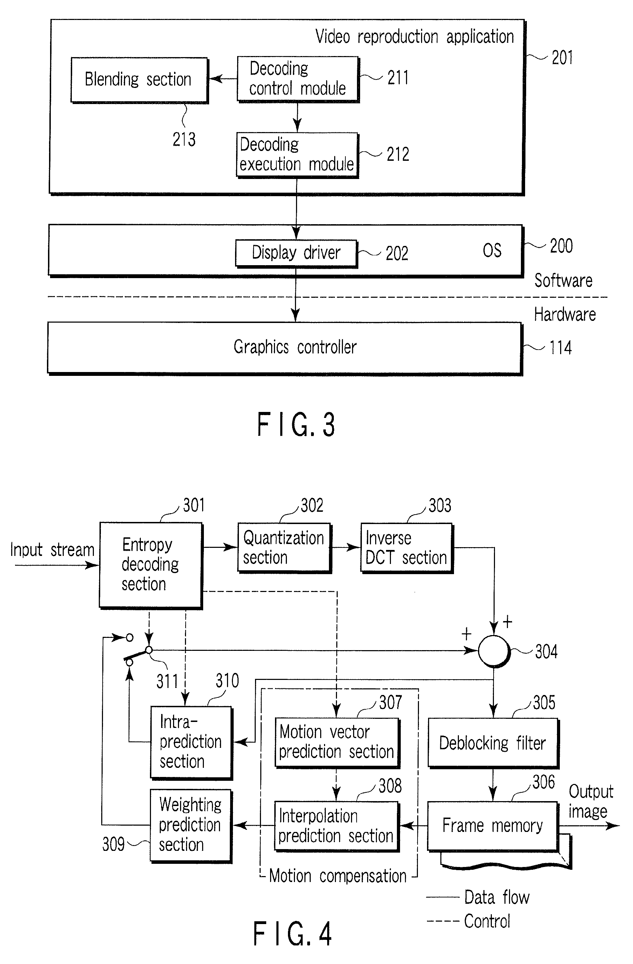

The video reproduction application program 201 includes a decoding control module 211, a decoding execution module 212 and a blending section 213, as illustrated in FIG. 3.

The decoding execution module 212 is a decoder for executing a decoding process defined by the H.264/AVC standard. The blending section 213 performs a blending process for superimposing two images decoded by the decoding execution module 212. The two images are superimposed in units of pixels on the basis of alpha data accompanying one of the images which is an upper one (alpha blending) to be superimposed on the other (lower) one. The alpha data is a coefficient indicating the transparency of each pixel of the upper image. In the present embodiment, both the upper and lower images are decoded by the decoding execution module 212; however, one of the images can be used as graphics for a menu panel which is prepared for a user interface.

The decoding control module 211 controls the contents of a decoding process to be executed by the decoding execution module 212, according to whether the image decoded by the decoding execution module 212 is used for the blending process of the blending section 213.

More specifically, when the image decoded by the decoding execution module 212 is not used for the blending process of the blending section 213, the decoding control module 211 controls the contents of a decoding process to be executed by the decoding execution module 212 in such a manner that the CPU 111 executes a decoding process defined by the H.264/AVC standard. On the other hand, when the image is used for the blending process of the blending section 213, the decoding control module 211 controls the contents of a decoding process to be executed by the decoding execution module 212 in such a manner that a decoding process defined by the H.264/AVC standard is partly simplified or omitted. For example, the module 211 varies the amount of processing for a deblocking filtering process, described later, in accordance with the transparency used for the blending process of the blending section 213.

The moving image data decoded by the video reproduction application program 201 is written to a video memory 114A of the graphics controller 114 through a display driver 202. Thus, the decoded moving image data is displayed on the LCD 17. The display driver 202 is software for controlling the graphics controller 114.

The CPU 111 also executes the basic input output system (BIOS) stored in the BIOS-ROM 120. The BIOS is a program for controlling hardware.

The north bridge 112 is a bridge device that connects a local bus of the CPU 111 and the south bridge 119. The north bridge 112 incorporates a memory controller for accessing the main memory 113. The north bridge 112 has a function of communicating with the graphics controller 114 through an accelerated graphics port (AGP) bus or the like.

The graphics controller 114 is a display controller for controlling the LCD 17 used as a display monitor of the computer 10. The controller 114 generates a display signal that is to be supplied to the LCD 17 from image data written to the video memory (VRAM) 114A.

The south bridge 119 controls devices on a low pin count (LPC) bus and devices on a peripheral component interconnect (PCI) bus. The south bridge 119 includes an integrated drive electronics (IDE) controller for controlling the HDD 121 and ODD 122. Further, the south bridge 119 has a function of controlling the digital TV broadcast tuner 123 and a function of accessing the BIOS-ROM 120.

The HDD 121 is a storage device for storing various types of software and various items of data. The ODD 122 is a drive unit for driving storage media such as a DVD that stores video contents. The digital TV broadcast tuner 123 is a receiving device for receiving broadcast program data, such as digital TV programs, from outside.

The embedded controller/keyboard controller IC 124 is a one-chip microcomputer on which an embedded controller for managing power and a keyboard controller for controlling the keyboard 13 and the touch panel 16 are integrated. The IC 124 has a function of turning on/off the computer 10 in accordance with a user's operation of the power button 14. Further, the IC 124 can turn off the computer 10 in accordance with user's operations of the TV start button 15A and DVD start button 15B. The network controller 125 is a communication device for communicating with an external network such as the Internet.

The configuration of a software decoder implemented by the video reproduction application program 201 will be described with reference to FIG. 4.

The decoding execution module 212 of the video reproduction application program 201 is based on the H. 264/AVC standard. As shown in FIG. 4, the module 213 includes an entropy decoding section 301, an inverse quantization section 302, an inverse discrete cosine transform (DCT) section 303, an addition section 304, a deblocking filtering section 305, a frame memory 306, a motion vector prediction section 307, an interpolation prediction section 308, a weighting prediction section 309, an intra-prediction section 310 and a mode selection switch section 311. The H.264 orthogonal transform is performed with integer precision and differs from the prior art DCT; however, it is assumed here that the H.264 orthogonal transform is referred to as DCT.

Each picture is coded in macro block units of 16 x 16 pixels. One of an in-frame coding mode (intra coding mode) and a motion compensation inter-frame prediction coding mode (inter-coding mode) is selected for each of macro blocks.

In the motion compensation inter-frame prediction coding mode, a motion compensation inter-frame prediction signal corresponding to a picture to be coded is generated in fixed units of form by predicting a motion from the coded picture. A prediction error signal generated by subtracting the motion compensation inter-frame prediction signal from the picture (picture) to be coded is coded by DCT, quantization and entropy coding. In the intra coding mode, a prediction signal is generated from the picture to be coded and then it is coded by DCT, quantization and entropy coding.

In order to increase the compression rate further, a CODEC based on the H.264/AVC standard employs the following techniques:

(1) Motion compensation with pixel accuracy (1/4 pixel accuracy) which is higher than that of the prior art MPEG;
(2) In-frame prediction for performing efficient in-frame coding;
(3) Deblocking filter for reducing the deformation of a block;
(4) Integer DCT in units of 4 x 4 pixels;
(5) Multi-reference frame in which a plurality of pictures (pictures) in given positions can be used as reference pictures; and
(6) Weighting prediction.

An operation of the software decoder shown in FIG. 4 will be described below.

The moving image stream that is compressed and coded on the basis of the H.264/AVC standard is first input to the entropy decoding section 301. This stream contains not only coded image information but also motion vector information used in motion compensation inter-frame prediction coding (inter-prediction coding), in-frame prediction information used in in-frame prediction coding (intra-prediction coding), and mode information indicating a prediction mode (inter-prediction coding/intra-prediction coding).

The decoding process is executed in macro block units of 16 x 16 pixels. The entropy decoding section 301 subjects a moving image stream to an entropy decoding process such as a variable-length decoding process to separate a quantization DCT coefficient, motion vector information (motion vector differential information), in-frame prediction information and mode information from the moving image stream. In this case, for example, each macro block in a picture (picture) to be decoded is subjected to an entropy decoding process in block units of 4 x 4 pixels (or 8 x 8 pixels), and each block is converted to a quantization DCT coefficient of 4 x 4 pixels (or 8 x 8 pixels). Assume in the following description that each block is formed of 4 x 4 pixels.

The motion vector information is supplied to the motion vector prediction section 307. The in-frame prediction information is sent to the intra-prediction section 310. The mode information is supplied to the mode selection switch section 311.

The 4 x 4 pixel quantization DCT coefficient of a block to be decoded is transformed into a 4 x 4 pixel quantization DCT coefficient (orthogonal transform coefficient) by the inverse quantization process of the inverse quantization section 302. The 4 x 4 pixel quantization DCT coefficient is transformed into a 4 x 4 pixel value from frequency information by the inverse integer DCT (inverse orthogonal transform) process of the inverse DCT section 303. The 4 x 4 pixel value is a prediction error signal corresponding to the block to be decoded. The prediction error signal is sent to the addition section 304. In this section 304, a prediction signal (motion compensation inter-frame prediction signal or in-frame prediction signal) corresponding to the block to be decoded is added to the prediction error signal, and thus the 4 x 4 pixel value corresponding to the block to be decoded is decoded.

In the intra-prediction mode, the intra-prediction section 310 is selected by the mode selection switch section 311, and an in-frame prediction signal is added to a prediction error signal from the intra-prediction section 310. In the inter-prediction mode, the weighting prediction section 309 is selected by the mode selection switch section 311, and thus a motion compensation inter-frame prediction signal, which is generated from the motion vector prediction section 307, interpolation prediction section 308 and weighting prediction section 309, is added to the prediction error signal.

As described above, a process of decoding a picture to be decoded by adding a prediction signal (motion compensation inter-frame signal or in-frame prediction signal) to a prediction error signal corresponding to the picture to be decoded, is executed in given block units.

The decoded picture is subjected to a deblocking filtering process by the deblocking filtering section 305 and then stored in the frame memory 306. The deblocking filtering process is performed in block units of 4 x 4 pixels in order to reduce block distortion from the decoded picture. The deblocking filtering process prevents a block distortion from being included in a reference image and prevents it from being transmitted to a decoded image. The amount of processing for a deblocking filtering process is very large and sometimes occupies 50 percent of the total amount of processing of the software decoder. The deblocking filtering process is executed appropriately to subject high filtering to an area where a block distortion is easy to occur and subject low filtering to an area where a block distortion is hard to occur. Each picture that has been subjected to the deblocking filtering process is read out of the frame memory 306 as an output image frame (or output image field). Each picture (reference picture) used as a reference image for the motion compensation inter-frame prediction is held in the frame memory 306 for a given period of time. In the motion compensation inter-frame prediction coding based on the H.264/AVC standard, a plurality of pictures can be used as reference ones. For this reason, the frame memory 306 includes a plurality of frame memory sections for storing images for a plurality of pictures.

The motion vector prediction section 307 generates motion vector information on the basis of motion vector differential information corresponding to a block to be decoded. The interpolation prediction section 308 generates a motion compensation inter-frame prediction signal from a group of pixels with integer precision and a group of prediction interpolation pixels with 1/4 pixel precision in the reference pictures, on the basis of the motion vector information corresponding to the block to be decoded. In order to achieve a prediction interpolation pixel with 1/4 pixel precision, a six-tap filter (six inputs and one output) is used first to generate a 1/2 pixel and then a two-tap filter is used. A high-precision prediction interpolation process in which even high-frequency components are considered can be performed; accordingly, a larger amount of processing is required for motion compensation.

The weighting prediction section 309 performs a process for multiplying a motion compensation inter-frame prediction signal by a weighting coefficient in motion compensation block units to generate a weighted motion compensation inter-frame prediction signal. This weighting prediction process is a process for predicting the brightness of a picture to be decoded. This process can improve the quality of an image that varies in brightness with time, such as a fade-in and a fade-out. However, the amount of processing required for software decoding increases.

The intra-prediction section 310 generates from a picture to be decoded an in-frame prediction signal of a block to be decoded, which is included in the picture. More specifically, the intra-prediction section 310 performs an in-frame prediction process in accordance with the above in-frame prediction information and generates an in-frame prediction signal from the value of pixels in a block which falls within the same picture as that of a block to be decoded, which is close to the block to be decoded, and which has already been decoded. This in-frame prediction (intra prediction) is a technique of increasing the compression rate using a correlation in pixel between blocks. In this technique, in the case of 16 x 16 pixels, one of four prediction modes including vertical prediction (prediction mode 0), horizontal prediction (prediction mode 1), average prediction (prediction mode 2) and plane prediction (prediction mode 3) is selected in units of in-frame prediction blocks in accordance with the in-frame prediction information. The frequency with which the plane prediction is selected is lower than that with which the other in-frame prediction modes are selected, but the amount of processing required for the plane prediction is larger than that required for the other in-frame prediction modes.

In the present embodiment, when the blending section 213 performs a blending process, a decoding process as described with reference to FIG. 4 (referred to as a normal decoding process hereinafter) and a special decoding process are selectively executed in order to decode an image used for the blending process. The special decoding process is a process which corresponds to a simplified deblocking filtering process or from which a deblocking filtering process is omitted, and can reduce the amount of processing (or the number of operations) for the deblocking filtering process (the strength of a deblocking filtering process for non-reference pictures, described later, is decreased if the designated transparency is higher than a reference value when a blending process is performed). A specific control method will be described later.

In the present embodiment, it is chiefly a moving image that is to reduce in the amount of processing of the deblocking filtering process. The moving image can be only the above-described upper image accompanied by alpha data used for a blending process, only the lower image, or both the upper and lower images. To avoid complicated descriptions, it is assumed below that the upper image (moving image) accompanied by alpha data is a target one reducing in the amount of processing of the deblocking filtering process.

The blending process (alpha blending) to be executed by the blending section 213 will be described briefly.

When a second image (upper image) is superimposed on a first image (lower image) in units of pixels, the blending section 213 computes a value of each pixel of the superimposed image by the following equation (1):

$$V = \alpha \times B + (1 - \alpha)A \qquad \qquad \ldots (1)$$

where V is a value of each pixel of the superimposed image obtained by alpha blending, $\alpha$ indicates alpha data 0 to 1 corresponding to each pixel of the second image, A is a value of each pixel of the first image, and B is a value of each pixel of the second image.

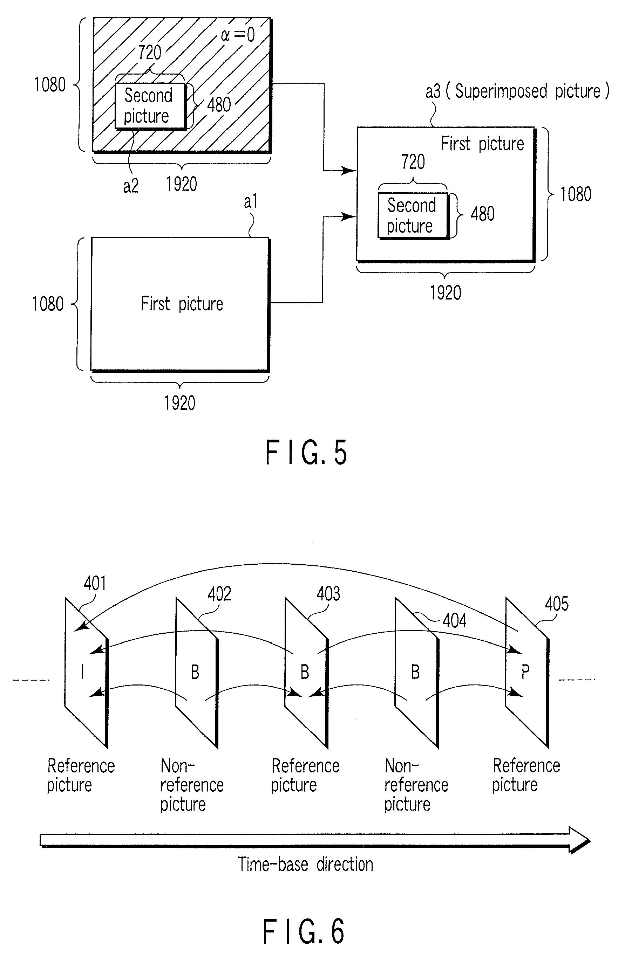

Assume here that a second picture (a2) of 720 x 480 pixels is superimposed on a first picture (a1) of 1920 x 1080 pixels into a superimposed picture (a3) by the blending (alpha blending) process, as illustrated in FIG. 5.

The alpha data of each pixel in that area in the first picture (a1) on which the second picture (a2) is not superimposed, is zero. The area therefore becomes transparent and thus the image data of the first picture (a1) is displayed on the area in the superimposed picture (a3) with 100% opacity. The pixels of image data of the second picture (a2) are displayed on the image data of the first picture (a1) on the superimposed picture (a3) with the transparency designated by alpha data corresponding to the image data of the second picture (a2). For example, the pixels of image data of the second picture (a2) of alpha data "1" are displayed with 100% opacity, and the pixels of image data of the first picture (a1) corresponding to those of the second picture (a2) are not displayed.

Reference and non-reference pictures included in a moving image stream will be described with reference to FIG. 6.

Various pictures included in a moving image stream that has not been decoded are input to the software decoder (FIG. 4) in predetermined order and subjected to a process such as motion compensation inter-frame prediction and in-frame prediction. Consider here that a picture (I picture) 401, a picture (B picture) 402, a picture (B picture) 403, a picture (B picture) 404 and a picture (P picture) 405 are input to the software decoder and processed in the order designated.

The P picture is a picture for performing a motion compensation inter-frame prediction process by referring to one picture. The B picture is a picture for performing a motion compensation inter-frame prediction process by referring to two pictures. The I picture is a picture for performing an in-frame prediction process only within the picture without referring to the other pictures.

The picture 401 shown in FIG. 6 does not refer to the other pictures but is referred to by the pictures 402, 403 and 405. The picture 403 refers to the pictures 401 and 405 and is referred to by the pictures 402 and 404. The picture 405 refers to the picture 401 and is referred to by the pictures 403 and 404. The pictures 401, 403 and 405, which are referred to by the other pictures in the inter-picture prediction, correspond to the reference pictures.

The picture 402 shown in FIG. 6 refers to the pictures 401 and 403 and is not referred to by the other pictures. The picture 404 refers to the pictures 403 and 405 and is not referred to by the other pictures. The pictures 402 and 404, which are referred to by the other pictures in the inter-picture prediction, correspond to the non-reference pictures.

The following three control methods can be employed to decrease the amount of processing for a deblocking filtering process in the special decoding process described above.

Control Method 1: When a condition is met, a deblocking filtering process for the non-reference pictures is disabled. Whether a target image is a reference picture or a non-reference picture can be determined by referring to a value, nal_ref_idc, which is included in a network abstraction layer (NAL) unit (described later). If the value is zero, the target image corresponds to a non-reference picture.

Control Method 2: When a condition is met, a deblocking filtering process corresponding to the non-reference pictures or all pictures is decreased in filtering strength. The filtering strength depends on the boundary strength (bS) that is obtained from the property of pixels to be filtered. The boundary strength (bS) represents one of 0, 1, 2, 3 and 4. If bS is 0, no filtering process is performed. If bS is four, the strongest filtering process is performed and accordingly the number of operations is increased. In control method 2, when bS is one of 1, 2 and 3, the filtering process is executed with the boundary strength (bS) equal to zero (in other words, the filtering strength is decreased). When bS is four, the filtering process is executed with the boundary strength (bS) equal to four (in other words, the filtering strength is maintained as it is).

Control Method 3: When a condition is met, a deblocking filtering process corresponding to all pictures is disabled.

Combining the above three control methods 1 to 3 appropriately, the following control can be performed. The quality of decoded images can be prevented from lowering when the transparency of pixels, which is designated when the images are subjected to a blending process, is low. The number of operations of a deblocking filtering process for the pixels whose transparency is low is decreased.

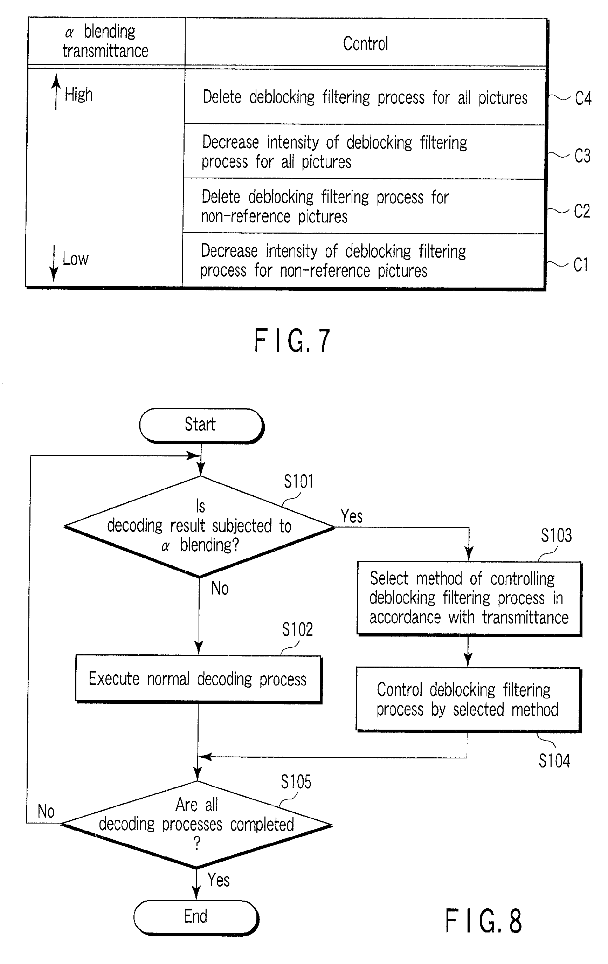

FIG. 7 is a table illustrating an example of control performed by the combination of the above three control methods.

In this example, when a blending process is performed for a picture included in a moving image stream, the amount of processing (the number of operations) for a deblocking filtering process varies step by step in accordance with the designated transparency.

When the transparency of an image, which is designated when the image is subjected to a blending process, exceeds 60%, a control mode C1 for decreasing the intensity of a deblocking filtering process for non-reference pictures is applied. When the designated transparency exceeds 70%, a control mode C2 for deleting the deblocking filtering process for non-reference pictures is applied. When the designated transparency exceeds 80%, a control mode C3 for decreasing the intensity of a deblocking filtering process for all pictures is applied. When the designated transparency exceeds 90%, a control mode C4 for deleting the deblocking filtering process for all pictures is applied.

The procedure for executing a decoding process by the video reproduction application program 201 will be described with reference to the flowchart shown in FIG. 8.

While the video reproduction application program 201 is executing a decoding process, it monitors whether the blending section 213 performs an alpha blending process (block S101). If no alpha blending process is performed (NO in block S101), the video reproduction application program 201 selects the above normal decoding process as a decoding process to be executed by the CPU 111 and thus performs the decoding process, which has been described with reference to FIG. 4, on the CPU 111 (block S102).

If an alpha blending process is performed (YES in block S101), the video reproduction application program 201 selects the above special decoding process as a decoding process to be executed by the CPU 111 and selects a control mode (FIG. 7) corresponding to the designated transparency (block S103).

When the designated transparency exceeds 60%, a control mode C1 for decreasing the intensity of a deblocking filtering process for non-reference pictures is applied. When the designated transparency exceeds 70%, a control mode C2 for deleting the deblocking filtering process for non-reference pictures is applied. When designated transparency exceeds 80%, a control mode C3 for decreasing the intensity of a deblocking filtering process for all pictures is applied. When the designated transparency exceeds 90%, a control mode C4 for deleting the deblocking filtering process for all pictures is applied.

In selecting the above control modes, the video reproduction application program 201 analyzes syntax information included in the moving image stream when the need arises, and determines whether a picture to be coded is a non-reference picture. The syntax information is information indicating the sequence structure of the moving image stream. The above-described motion vector information, in-frame prediction information and mode information are also included in the syntax information. The program 201 can detect a non-reference picture group from the coded pictures included in the moving image stream, on the basis of the syntax information that has been subjected to an entropy decoding process.

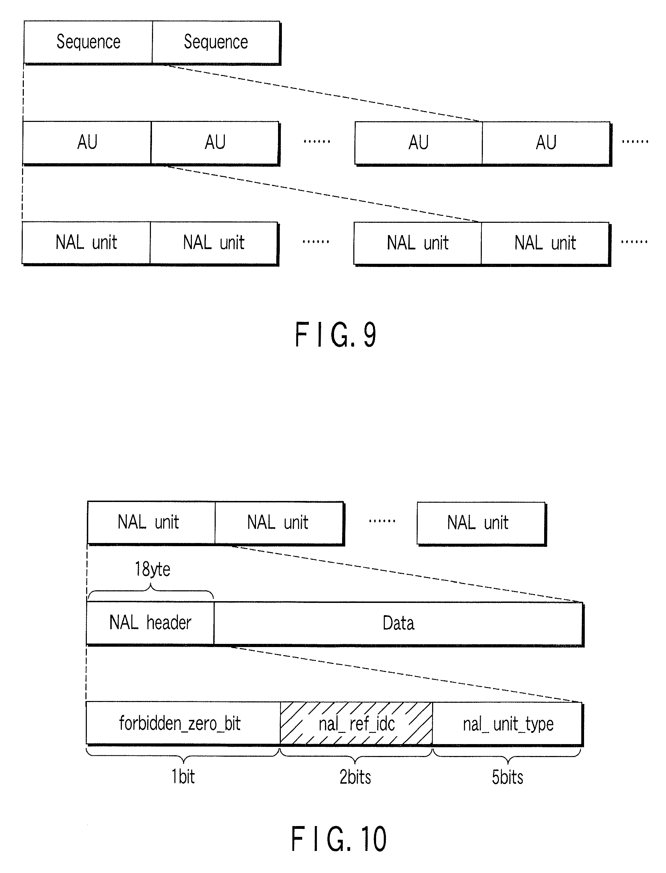

More specifically, the H.264 sequence structure includes a plurality of access units (AU), as illustrated in FIG. 9. Each of the access units corresponds to one picture and includes a plurality of NAL units. The NAL units are divided into a header section and a data section, as shown in FIG. 10. The number of NAL units is thirty-two, and they can be discriminated by analyzing the NAL header section. The NAL header section includes the above-described value "nal_ref_idc." Referring to this value, it is possible to determine whether a target image is a reference picture or a non-reference picture. If the value "nal_ref_idc" is zero, the image is determined as a non-reference picture.

Then, the video reproduction application program 201 performs a decoding process on the CPU 111 to reduce the amount of processing of the deblocking filtering process in accordance with the selected control mode (block S104).

The foregoing blocks S101 to S104 are repeated until all moving image streams are completely decoded (block S105).

As described above, when the video reproduction application program 201 performs a blending process for an image, it selects a control mode corresponding to the designated transparency and performs a special decoding process from which the deblocking filtering process is reduced by an appropriate amount.

In the present embodiment, the upper image (picture) is used as a target one from which a deblocking filtering process is reduced by an appropriate amount. However, the lower image (picture) can be used as the target one, as can be both the upper and lower images (pictures). In this case, the method and operation of control are the same as described with reference to FIGS. 7 and 8.

As has been described above, the decoding process can be reduced step by step in accordance with the designated transparency when a picture to be decoded is subjected to an alpha blending process. Thus, the audience can be prevented from having the impression that the quality of a decoded image lowers abruptly, and a frame drop due to a delay in decoding can be avoided as much as possible. Accordingly, a moving image can be reproduced smoothly.

The above decoding process is achieved by all computer programs. If, therefore, the computer programs are simply introduced into a normal computer through a computer readable storage medium, the same advantages as those of the present embodiment can easily be obtained.

The software decoder of the present embodiment is not limited to a personal computer but can be applied to a personal digital assistant (PDA), a cellular phone, and the like.

As described above, a moving image stream can be decoded smoothly.

**Claims**

1. An information processing apparatus, **characterized by** comprising:

   means (212) for decoding a moving image stream that is compressed and coded;
   means (305) for performing a deblocking filtering process for a picture included in the moving image stream to reduce a block distortion;
   means (213) for performing a blending process of superimposing a second picture on a first picture with designated transparency; and
   control means (211) for determining whether the blending process is performed for the picture included in the moving image stream and, when the blending process is performed, varying an amount of processing of the deblocking filtering process for at least one of the first and second pictures in accordance with the transparency.

2. The information processing apparatus according to claim 1, **characterized in that** the control means (211) varies an amount of processing of the deblocking filtering process for one of the first and second pictures, which corresponds to a moving image, when the blending process is performed.

3. The information processing apparatus according to one of claims 1 and 2, **characterized in that** the control means (211) varies intensity of the deblocking filtering process in accordance with the transparency when the blending process is performed.

4. The information processing apparatus according to claim 3, **characterized in that** the control means (211) decreases the intensity of the deblocking filtering process if the transparency is higher than a reference value when the blending process is performed.

5. The information processing apparatus according to claim 1, **characterized in that** the control means (211) varies a picture, which is to decrease in the amount of processing of the deblocking filtering process, in accordance with the transparency when the blending process is performed.

6. The information processing apparatus according to claim 5, **characterized in that** the control means (211) decreases intensity of a deblocking filtering process for a non-reference picture if the transparency is higher than a reference value when the blending process is performed, the non-reference picture being one of pictures included in the moving image stream and not being referred to by another picture in inter-frame prediction.

7. A decoding method, **characterized by** comprising:

   decoding a moving image stream that is compressed and coded;
   performing a deblocking filtering process for a picture included in the moving image stream to reduce a block distortion;
   determining (S101) whether a blending process of superimposing a second picture on a first picture with designated transparency is performed for a picture included in the moving image stream; and

varying (S103, S104) an amount of processing of the deblocking filtering process for at least one of the first and second pictures in accordance with the transparency when the blending process is performed.

8. The method according to claim 7, **characterized in that** the varying (S103, S104) includes decreasing intensity of the deblocking filtering process if the transparency is higher than a reference value when the blending process is performed.

9. The method according to claim 7, **characterized in that** the varying (S103, S104) includes decreasing intensity of a deblocking filtering process for a non-reference picture if the transparency is higher than a reference value when the blending process is performed, the non-reference picture being one of pictures included in the moving image stream and not being referred to by another picture in inter-frame prediction.

F I G. 1

FIG. 2

- 17 LCD
- 114 Graphics controller
- 114A VRAM
- 121 HDD
- 122 ODD
- 125 Network controller
- PCI bus
- 111 CPU
- 112 North bridge
- 119 South bridge
- 113 Memory
- 201 Video reproduction application
- 120 BIOS-ROM
- 123 Digital TV broadcast tuner
- 124 EC/KBC
- 16 Touch pad
- 13 KB
- 14
- 15A
- 15B
- LPC bus

Video reproduction application ~ 201

Blending section ← Decoding control module ~ 211

213

Decoding execution module ~ 212

Display driver ~ 202    OS ~ 200

Software

Hardware

Graphics controller ~ 114

F I G. 3

Input stream → Entropy decoding section ~ 301 → Quantization section ~ 302 → Inverse DCT section ~ 303

+ + ~ 304

311    310

Intra-prediction section

Motion vector prediction section ~ 307

Deblocking filter ~ 305

Weighting prediction section

309

Interpolation prediction section ~ 308

Frame memory ~ 306

Output image

Motion compensation

—— Data flow
---- Control

F I G. 4

FIG. 5

FIG. 6

| α blending transmittance | Control | |
|---|---|---|
| ↑ High | Delete deblocking filtering process for all pictures | ~ C4 |
| | Decrease intensity of deblocking filtering process for all pictures | ~ C3 |
| | Delete deblocking filtering process for non-reference pictures | ~ C2 |
| ↓ Low | Decrease intensity of deblocking filtering process for non-reference pictures | ~ C1 |

F I G. 7

Start

S101 Is decoding result subjected to α blending?

Yes → S103 Select method of controlling deblocking filtering process in accordance with transmittance

→ S104 Control deblocking filtering process by selected method

No → S102 Execute normal decoding process

S105 Are all decoding processes completed ?

No

Yes

End

F I G. 8

| Sequence | Sequence |
|----------|----------|

| AU | AU | ...... | AU | AU | ...... |

| NAL unit | NAL unit | ...... | NAL unit | NAL unit | ...... |

FIG. 9

| NAL unit | NAL unit | ...... | NAL unit |

18yte

| NAL header | Data |

| forbidden_zero_bit | nal_ref_idc | nal_unit_type |

1bit          2bits          5bits

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   JP 2001245294 A